# EUROPÄISCHE PATENTSCHRIFT

(11) **EP 3 554 903 B1**
(45) Veröffentlichungstag und Bekanntmachung des Hinweises auf die Patenterteilung: **06.01.2021**
(21) Anmeldenummer: 17800535.1
(22) Anmeldetag: 17.11.2017
(51) Int. Cl.: B60T 13/567, B60T 17/04

(54) **BREMSKRAFTVERSTÄRKER MIT EINER BAUKASTENOPTIMIERTEN GEHÄUSESCHALE**
BRAKE BOOSTER WITH A MODULARITY OPTIMISED HOUSING SHELL
SERVOFREIN AVEC UN SEMI-BOÎTIER OPTIMISÉ POUR MODULARITÉ

(30) Priorität: 15.12.2016 DE 102016225210
(43) Veröffentlichungstag der Anmeldung: 23.10.2019
(73) Patentinhaber: Continental Teves AG & Co. OHG, 60488 Frankfurt am Main (DE)
(72) Erfinder: EBERHART, Rene Peter, 61440 Oberursel (DE); FALLER, Jürgen, 63796 Kahl (DE)
(86) Internationale Anmeldenummer: PCT/EP2017/079597
(87) Internationale Veröffentlichungsnummer: WO 2018/108449

(56) Entgegenhaltungen:
- DE-A1- 10 008 795
- DE-A1- 10 122 952
- DE-A1-102012 208 866
- FR-A1- 2 537 524

## Beschreibung

Die Erfindung betrifft einen pneumatischen Bremskraftverstärker insbesondere für eine hydraulische Kraftfahrzeugbremsanlage mit Merkmalen nach dem Oberbegriff des Anspruchs 1 sowie ein Baukastensystem zum optimierten Aufbau von Anwendungsspezifischen Ausführungen des Bremskraftverstärkers.

Pneumatische Bremskraftverstärker sind grundsätzlich bekannt und weit verbreitet. Das Verstärkergehäuse von einem derartigen Bremskraftverstärker ist meist dünnwandig aus Blech umformtechnisch ausgebildet. An einer oder mehreren Gehäuseschalen eines derartigen Gehäuses müssen üblicherweise ein oder mehrere Anschlüsse zur Herstellung von pneumatischen und/oder elektrischen Verbindungen angebracht werden.

Die räumlichen Positionen und Winkellagen für diese Anschlüsse variieren applikationsbedingt und der Bremskraftverstärker muss für die jeweils benötigte Position und Winkellage angepasst werden.

Es besteht daher der Bedarf, den Bremskraftverstärker dahingehend zu optimieren, dass eine Anpassung an die jeweils benötigte Position der Anschlüsse mit möglichst wenig Kosten und Änderungsaufwand erfolgen kann.

Aus DE 101 22 952 A1 ist es bekannt, in einer Gehäuseschale eine oder mehrere am Umfang der Gehäuseschale verteilten, jeweils an einen einzelnen Anschlussstutzen angepassten Ausbeulungen vorzusehen, welche durch ihre Formgebung auch eine Verdrehsicherung und so eine definierte räumliche Lage für den Anschlussstutzen gewährleisten.

Eine derartige Lösung erfordert jedoch für die Herstellung unterschiedlicher Varianten der Gehäuseschale mehrere Tiefziehwerkzeuge oder zumindest erhebliche Anpassungen an einem Werkzeug und lange Umrüstzeiten, zudem eine besonders genaue und sichere Vorausplanend der benötigten Stückzahlen der einzelnen Varianten, um die Lagerhaltung gering zu halten.

Es stellt sich somit die Aufgabe einen Bremskraftverstärker anzubieten, mit dem kostengünstig eine verbesserte Anpassungsfähigkeit an kunden- und applikationsspezifische Anforderungen bezüglich räumlicher Anschlussanordnung realisiert werden kann.

Die Aufgabe wird erfindungsgemäß durch einen Bremskraftverstärker mit der Merkmalskombination nach dem Anspruch 1 insbesondere in Verbindung mit einem darauf aufbauenden Baukastensystem gelöst. Unteransprüche zusammen mit Figuren und Beschreibungen geben weitere erfindungsgemäße Ausführungsformen und vorteilhafte Weiterbildungen an.

Im Folgenden werden die Einzelheiten und Vorteile der Erfindung anhand Figurenbeschreibungen näher erläutert. Dabei wird auf die Beschreibung von allgemein bekannten Aspekten und Funktionen eines gattungsgemäßen Bremskraftverstärkers weitestgehend verzichtet und lediglich auf die erfindungsrelevanten Details eingegangen.

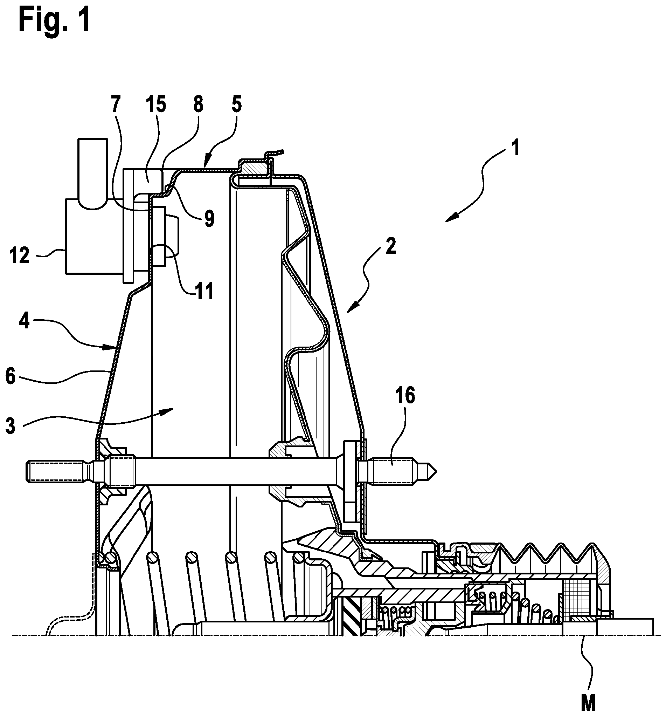

Im Einzelnen zeigt die
Fig.1 einen erfindungsgemäßen Ausführungsform des Bremskraftverstärkers in Axialschnitt.
Fig.2 räumliche Darstellung einer ersten erfindungsgemäßen Ausführungsform einer Gehäuseschale.
Fig.3 räumliche Darstellung einer zweiten erfindungsgemäßen Ausführungsform einer Gehäuseschale.
Fig.4 und 5 räumliche Darstellung von zwei Varianten einer Gehäuseschale innerhalb eines erfindungsgemäßen Baukastensystems.

### Fig.1

Ein pneumatischer Bremskraftverstärker 1 weist ein dünnwandiges Verstärkergehäuse 2 mit einer Gehäuseschale 3 die umformtechnisch, meist mittels eines Tiefziehverfahrens aus einem Blechwerkstoff hergestellt wird. Die Gehäuseschale 3 ist im Wesentlichen topfförmig und weitgehend rotationssymmetrisch um eine Mittelachse M ausgebildet, so dass ein axial stirnseitiger Bodenabschnitt 4 und ein radial umlaufender Mantelabschnitt 5 definiert werden können.

Der Bodenabschnitt 4 ist aus Stabilitätsgründen zu einem großen Teil durch einen wie im vorliegenden Ausführungsbeispiel kegeligen oder anderweitig axial nach außen gewölbten Wandungsbereich 6 gebildet.

Im radialen Außenbereich des Bodenabschnitts 4 verfügt die erfindungsgemäße Gehäuseschale 3 über ein eben abgeflachtes, gegenüber dem benachbarten kegeligen Wandungsbereich 6 axial nach innen abgesetztes und im Wesentlichen orthogonal zu der Mittelachse M ausgerichtetes Flächenareal 7. Am radialen Außenrand 8 des Flächenareals 7, am Übergang in die den Mantelabschnitt 5 ist in die Gehäuseschale 3 eine Einkerbung 9 eingeformt. Zudem ist innerhalb des Flächenareals ein Durchbruch 11 durch die Wandung der Gehäuseschale 3 angeordnet. Ein Bauteil 12, dessen Position und/oder Winkellage am Umfang des Bremskraftverstärkers 1 implementiert werden muss, ist in den Durchbruch 1 gesteckt und verfügt zur Verdrehsicherung über ein als ein an einem Ausleger angeordneter Vorsprung gestaltetes Verdrehsicherungselement 15, welcher formschlüssig in die Einkerbung 9 eingreift. Das Bauteil 12 kann beispielsweise ein pneumatischer Anschlussstutzen, Ein elektrischer Stecker oder eine andere vergleichbare Komponente sein.

### Fig.2

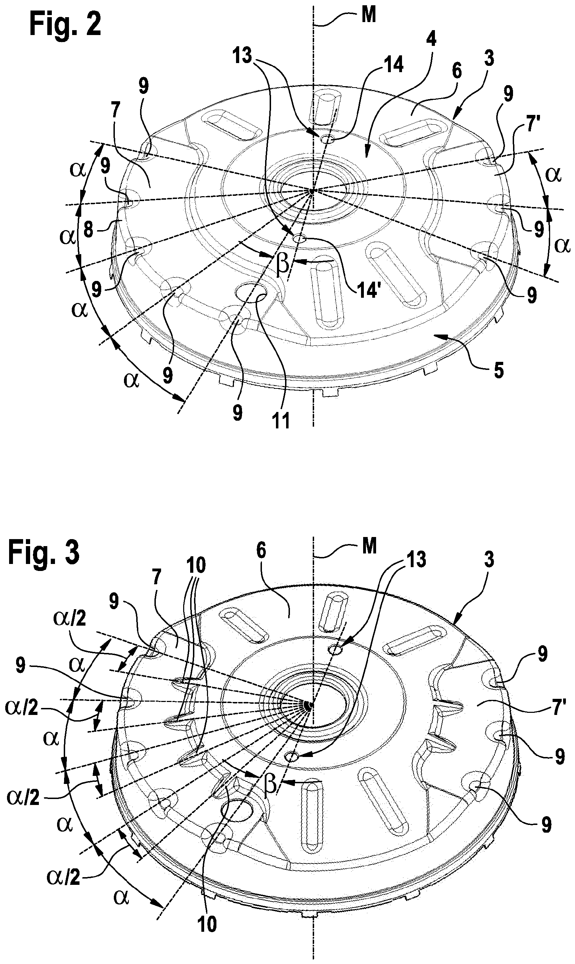

Die Fig.2 zeigt eine erste erfindungsgemäße Ausführungsform einer verbesserten Gehäuseschale 3 in räumlicher Darstellung. Im radial äußeren Bereich des Bodenabschnitts 4 sind zwei in Umfangsrichtung zueinander versetzten ebenen Flächenareale 7 beziehungsweise 7' eingeformt. Jedes Flächenareal ist in Umfangsrichtung gestreckt ausgebildet und verfügt an seinem radialen Außenrand 8 über jeweils mehrere jedoch gleich beziehungsweise uniform ausgebildete Einkerbungen 9. Die Anzahl n der Einkerbungen 9 ist bei jedem Flächenareal unterschiedlich und beträgt bei dem kleineren Flächenareal 7' n=3 und bei dem größeren Flächenareal 7 n=3+2 beziehungsweise n=5. Für eine optimale Anpassbarkeit der Gehäuseschale 3 sollte ein Flächenareal vorzugsweise für mindestens zwei Einkerbungen 9 ausgelegt sein. Die Einkerbungen 9 sind in einem definierten Raster mit einem Kreiswinkel α um die Mittelachse M in Umfangsrichtung zueinander versetzt angeordnet. Ein Durchbruch 11 zur Aufnahme eines Bauteils 12 ist einer bestimmten Einkerbung 9 zugeordnet, womit auch die Position und Winkellage des darin einzusetzenden Bauteils 12 eindeutig festgelegt ist.

Zur Befestigung des Bremskraftverstärkers 1 im Fahrzeug dienen Befestigungselemente 16, welche das Verstärkergehäuse 2 und somit auch die Gehäuseschale 3 durch die Löcher 14, 14' durchragen und aufgrund ihrer festgelegten Lage zueinander ein bestimmtes Lochbild 13 definieren.

Die Verdreh- beziehungsweise Winkellage um die Mittelachse M der Gehäuseschale 3 im Fahrzeug wird durch die den Verdrehwinkel β des Lochbilds 13 festgelegt.

Somit lässt sich ein effizientes optimiertes Baukastensystem aufbauen, bei dem die jeweils benötigten Varianten des Bremskraftverstärkers 1 lediglich durch die Variation der Gehäuseschale 3 erzeugen lässt, wobei die Anpassung der Gehäuseschale 3 auf die jeweils benötigte Variante wegen ihrer erfindungsgemäßen Gestaltung besonders einfach und flexibel erfolgt.

Durch eine einfache Variation des Verdrehwinkels β und/oder der Anordnung des Durchbruchs 11 bei einer bestimmten Einkerbung 9 kann mit einem reduzierten Aufwand durch eine lediglich geringe Anpassung des Werkzeugs eine beliebige gewünschte Umfangs- oder Winkelposition des Bauteils 12 realisiert werden.

Ein bestimmtes Anordnungsmuster mit mehreren Durchbrüchen 11 in einer Gehäuseschale 3, beispielsweise für mehrere Anschlüsse ist ebenso ohne großen Zusatzaufwand realisierbar.

Durch eine eindeutige gleichmäßige Rasterung und das Vorhalten eines relativ ausgedehnten ebenen Flächenareals 7 müssen im Werkzeug lediglich die Winkellage der Stanzeinsätze für den oder die Durchbrüche 11 und das Lochbild 13 geändert werden um eine beliebige erforderliche Variante der Gehäuseschale 3 und somit des Bremskraftverstärkers 1 zu erzeugen.

Es ist ebenso möglich, die Gehäuseschale 11 zunächst als eine universales Halbzeug ohne vorstehend erwähnten Durchbrüche oder Löcher kostengünstig in großen Stückzahlen herzustellen und das Stanzen der Durchbruchs 11 und des Lochbilds 13 in einem nachgelagerten Fertigungsschritt in der gerader erforderlichen Variante mit einem günstigen Stanzwerkzeug erfolgen zu lassen.

### Fig.3

Die Fig.3 zeigt eine zweite erfindungsgemäße Ausführungsform einer verbesserten Gehäuseschale 3. Die Flächenareale 7 mindern aufgrund ihrer ebenen Gestaltung die Stabilität der Gehäuseschale 3, weil dadurch der prozentuelle Anteil des kegeligen oder gewölbten Wandungsbereichs 6 am gesamten Bodenabschnitt 4 reduziert wird. Um dem entgegenzuwirken verfügt die hier gezeigte Ausführungsform über gesonderte rippenartige Vorsprünge 10, welcher aus dem Wandungsbereich 6 radial nach außen in das Flächenareal 7 hineinragen.

Die Vorsprunge 10 sind gegenüber dem Raster der Einkerbungen 9 um jeweils die Hälfte des Kreiswinkels α in Umfangsrichtung versetzt und dadurch jeweils zwischen zwei benachbarten Einkerbungen 9 positioniert. Sinngemäß wird an einem Flächenareal 7, 7' jeweils ein Vorsprung 10 weniger benötigt als die Anzahl n der Einkerbungen.

Die Anpassbarkeit der Gehäuseschale 3 an unterschiedliche Varianten wird durch die Vorsprünge keinesfalls beeinträchtigt, weil weder die Positionierbarkeit des Durchbruchs 11 noch des Bauteils 11 dadurch gestört ist.

### Fig. 4, 5

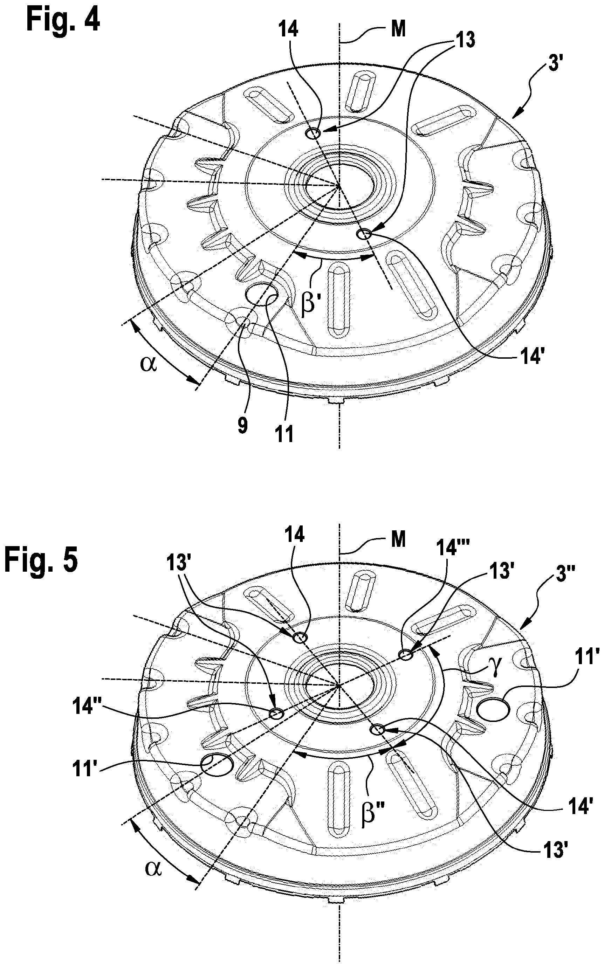

Die Fig.4 und 5 verdeutlichen den Aufbauprinzip des Baukastens und die Variierbarkeit der Gehäuseschale 3.

Bei der Variante der Gehäuseschale 3' in der Fig.4 wurde das Lochbild 13 im Unterschied zu der Ausführungsform der Gehäuseschale 3 nach Fig. 3 um einen Verdrehwinkel β' statt β gegenüber dem Raster der Einkerbungen 9 angeordnet, wodurch die Höhenposition des Durchbruchs 11, der zugehörigen Einkerbung 9 und die Winkellage des in den Durchbruch 11 einzusetzenden Bauteils 12 im Fahrzeug geändert.

Bei der Variante der Gehäuseschale 3" in der Fig.5 wurde das Lochbild 13' geändert, indem zu der vorstehend beschriebenen achssymmetrischen Lochpaarung 14 und 14' eine weitere, um eine Lochwinkel γ gedrehte Lochpaarung 14" und 14'" hinzugenommen wurde, das Lochbild 13' mit einem anderen Verdrehwinkel β" angeordnet und statt ein gegenüber bisher gezeigten Varianten anderes Anordnungsmuster mit zwei Durchbrüchen 11' verwendet.

### Bezugszeichenliste

- 1: Bremskraftverstärker
- 2: Verstärkergehäuse
- 3: Gehäuseschale
- 4: Bodenabschnitt
- 5: Mantelabschnitt
- 6: Wandungsbereich
- 7: Flächenareal
- 8: Außenrand
- 9: Einkerbung
- 10: Vorsprung
- 11: Durchbruch
- 12: Bauteil
- 13: Lochbild
- 14: Loch
- 15: Verdrehsicherungselement
- 16: Befestigungselement
- α: Kreiswinkel
- β: Verdrehwinkel
- γ: Lochwinkel
- M: Mittelachse

## Patentansprüche

1. Pneumatischer Bremskraftverstärker (1) umfassend ein Verstärkergehäuse (2) mit wenigstens einer Gehäuseschale (3), wobei die Gehäuseschale (3) im Wesentlichen topfförmig mit einer Mittelachse (M), einem Bodenabschnitt (4) und einem Mantelabschnitt (5) ausgebildet ist und der Bodenabschnitt (4) einen gewölbten oder kegeligen Wandungsbereich (6) aufweist, **dadurch gekennzeichnet, dass** in einem radialen Außenbereich des Bodenabschnitts (4) wenigstens ein abgeflachtes Flächenareal (7) eingeformt ist, welches in Umfangsrichtung gestreckt ausgebildet ist und an seinem radialen Außenrand (8) wenigstens zwei Einkerbungen (9) aufweist, die in einem definierten Raster mit einem Kreiswinkel (α) zueinander angeordnet sind.

2. Bremskraftverstärker (1) nach Anspruch 1, **dadurch gekennzeichnet, dass** das Flächenareal (7) gegenüber dem Wandungsbereich (6) axial nach innen abgesetzt angeordnet ist.

3. Bremskraftverstärker (1) nach Anspruch 1, **dadurch gekennzeichnet, dass** das Flächenareal (7) im Wesentlichen eben sowie orthogonal zu der Mittelachse (M) ausgeformt ist.

4. Bremskraftverstärker (1) nach Anspruch 1, **dadurch gekennzeichnet, dass** die Einkerbungen (9) in den Mantelabschnitt (5) hineinragend gestaltet sind.

5. Bremskraftverstärker (1) nach Anspruch 3, **dadurch gekennzeichnet, dass** die Einkerbungen (9) uniform ausgebildet sind.

6. Bremskraftverstärker (1) nach Anspruch 1, **dadurch gekennzeichnet, dass** an der Gehäuseschale (3) wenigstens ein Vorsprung (10) ausgebildet ist, welcher aus dem Wandungsbereich (6) radial nach außen in das Flächenareal (7) hineinragt und in Umfangsrichtung zwischen zwei benachbarten Einkerbungen (9) positioniert ist.

7. Bremskraftverstärker (1) nach Anspruch 6, **dadurch gekennzeichnet, dass** das Flächenareal (7) eine Anzahl n>2 Einkerbungen (9) sowie n-1 Vorsprünge (10) aufweist und jeder Vorsprung (10) in Umfangsrichtung zwischen zwei benachbarten Einkerbungen (9) positioniert ist.

8. Bremskraftverstärker (1) nach einem der Ansprüche 6 oder 7, **dadurch gekennzeichnet, dass** der wenigstens eine Vorsprung (10) gegenüber der Einkerbungen (9) um jeweils die Hälfte des Kreiswinkels (α) in Umfangsrichtung versetzt positioniert ist.

9. Bremskraftverstärker (1) nach einem der vorstehenden Ansprüche, **dadurch gekennzeichnet, dass** in der Gehäuseschale (3) wenigstens zwei in Umfangsrichtung zueinander versetzten Flächenareale (7,7') eingeformt sind.

10. Bremskraftverstärker (1) nach Anspruch 9, **dadurch gekennzeichnet, dass** die Flächenareale (7,7') jeweils unterschiedliche Anzahl (n, n+x) von Einkerbungen (9) aufweisen.

11. Bremskraftverstärker (1) nach Anspruch 1 oder 9, **dadurch gekennzeichnet, dass** in wenigstens einem Flächenareal (7) wenigstens ein Durchbruch (11) zur Aufnahme eines weiteren Bauteils (12) angeordnet ist, welcher einer definierten Einkerbung (9) zugeordnet ist.

12. Baukastensystem umfassend zwei oder mehr Gehäuseschalen (3, 3', ...) aus dem Bremskraftverstärker nach einem der vorstehenden Ansprüche, **dadurch gekennzeichnet, dass** jede Gehäuseschale (3, 3',...) im Bodenabschnitt (4) ein definiertes Lochbild (13) mit wenigstens zwei Löcher (14, 14') aufweist und jeder Gehäuseschale (3, 3',...) ein eigener Verdrehwinkel (β, β', ...) zugeordnet ist, um welchen das Lochbild (13) gegenüber dem Raster der Einkerbungen (9) in Umfangsrichtung um die Mittelachse (M) versetzt angeordnet ist.

13. Baukastensystem nach Anspruch 12 **dadurch gekennzeichnet, dass** das Lochbild (13) wenigstens zwei Löcher (14, 14') zueinander um die Mittelachse (M) achssymmetrisch angeordnet sind.

14. Baukastensystem umfassend zwei oder mehr Gehäuseschalen (3, 3',...) aus dem Bremskraftverstärker nach Anspruch 11 **dadurch gekennzeichnet, dass** jede Gehäuseschale (3, 3',...) ein eigenes definiertes Anordnungsmuster des oder der Durchbrüche (11, 11', ...) aufweist.

## Claims

1. Pneumatic brake booster (1) comprising a booster housing (2) having at least one housing shell (3), wherein the housing shell (3) is designed to be substantially pot-shaped with a center axis (M), a base portion (4) and a lateral portion (5), and the base portion (4) has a curved or conical wall portion (6), **characterized in that** at least one flattened surface area (7) is formed in a radial outer region of the base portion (4), is designed to be elongate in the circumferential direction and has, at its radial outer edge (8), at least two notches (9) which are arranged with respect to one another in a defined grid pattern with a circle angle (α).

2. Brake booster (1) according to Claim 1, **characterized in that** the surface area (7) is arranged so as to be recessed axially inward with respect to the wall region (6).

3. Brake booster (1) according to Claim 1, **characterized in that** the surface area (7) is designed to be substantially planar and orthogonal to the center axis (M) .

4. Brake booster (1) according to Claim 1, **characterized in that** the notches (9) are designed to project into the lateral portion (5).

5. Brake booster (1) according to Claim 3, **characterized in that** the notches (9) are of uniform design.

6. Brake booster (1) according to Claim 1, **characterized in that** at least one projection (10) is formed on the housing shell (3), projects radially outward from the wall region (6) into the surface area (7) and is positioned in the circumferential direction between two adjacent notches (9).

7. Brake booster (1) according to Claim 6, **characterized in that** the surface area (7) has a number n>2 notches (9) and n-1 projections (10), and each projection (10) is positioned in the circumferential direction between two adjacent notches (9).

8. Brake booster (1) according to either of Claims 6 and 7, **characterized in that** the at least one projection (10) is positioned offset in the circumferential direction with respect to the notches (9) by in each case the half of the circle angle (α).

9. Brake booster (1) according to one of the preceding claims, **characterized in that** at least two surface areas (7, 7') offset with respect to one another in the circumferential direction are formed in the housing shell (3) .

10. Brake booster (1) according to Claim 9, **characterized in that** the surface areas (7, 7') each have a different number (n, n+x) of notches (9).

11. Brake booster (1) according to Claim 1 or 9, **characterized in that** at least one aperture (11) for receiving a further component (12) and assigned to a defined notch (9) is arranged in at least one surface area (7).

12. Modular system comprising two or more housing shells (3, 3', ...) of the brake booster according to one of the preceding claims, **characterized in that** each housing shell (3, 3', ...) has, in the base portion (4), a defined hole pattern (13) with at least two holes (14, 14'), and each housing shell (3, 3', ...) is assigned a dedicated rotation angle (β, β', ...) by which the hole pattern (13) is arranged offset in the circumferential direction about the center axis (M) with respect to the grid pattern of the notches (9).

13. Modular system according to Claim 12, **characterized in that** the hole pattern (13) of at least two holes (14, 14') are arranged axisymmetrically with respect to one another about the center axis (M).

14. Modular system comprising two or more housing shells (3, 3', ...) of the brake booster according to Claim 11, **characterized in that** each housing shell (3, 3', ...) has a dedicated defined arrangement pattern of the aperture (s) (11, 11', ...).

## Revendications

1. Servofrein pneumatique (1) comprenant un boîtier de servofrein (2) pourvu d'au moins une coque de boîtier (3), la coque de boîtier (3) étant sensiblement en forme de pot et comportant un axe central (M), une portion de fond (4) et une portion d'enveloppe (5) et la portion de fond (4) comportant une zone de paroi bombée ou conique (6), **caractérisé en ce que** au moins une zone de surface aplatie (7) est formée dans une région extérieure radiale de la portion de fond (4), s'étend dans la direction circonférentielle et comporte sur son bord extérieur radial (8) au moins deux encoches (9) qui sont disposées l'une par rapport à l'autre suivant une trame définie en formant un angle circulaire (α).

2. Servofrein (1) selon la revendication 1, **caractérisé en ce que** la zone de surface (7) est disposée de manière axialement décalée vers l'intérieur par rapport à la région de paroi (6).

3. Servofrein (1) selon la revendication 1, **caractérisé en ce que** la zone de surface (7) est formée de manière sensiblement plane et orthogonale à l'axe central (M).

4. Servofrein (1) selon la revendication 1, **caractérisé en ce que** les encoches (9) sont destinées à faire saillie dans la portion d'enveloppe (5).

5. Servofrein (1) selon la revendication 3, **caractérisé en ce que** les encoches (9) sont uniformes.

6. Servofrein (1) selon la revendication 1, **caractérisé en ce que** au moins une saillie (10) est formée sur la coque de boîtier (3), fait saillie de la région de paroi (6) radialement vers l'extérieur jusque dans la zone de surface (7) et est positionnée dans la direction circonférentielle entre deux encoches adjacentes (9) .

7. Servofrein (1) selon la revendication 6, **caractérisé en ce que** la zone de surface (7) présente un nombre n > 2 d'encoches (9) et n-1 saillies (10) et chaque saillie (10) est positionnée dans la direction circonférentielle entre deux encoches adjacentes (9).

8. Servofrein (1) selon l'une des revendications 6 et 7, **caractérisé en ce que** l'au moins une saillie (10) est positionnée de manière décalée de la moitié de l'angle circulaire (α) dans la direction circonférentielle par rapport aux encoches (9).

9. Servofrein (1) selon l'une des revendications précédentes, **caractérisé en ce qu'**au moins deux zones de surface (7, 7') sont formées dans la coque de boîtier (3) de manière décalée l'une de l'autre dans la direction circonférentielle.

10. Servofrein (1) selon la revendication 9, **caractérisé en ce que** les zones de surface (7, 7') comportent chacune un nombre différent (n, n+x) d'encoches (9).

11. Servofrein (1) selon la revendication 1 ou 9, **caractérisé en ce qu'**au moins un passage (11), qui est associé à une encoche définie (9), est ménagé dans au moins une zone de surface (7) pour recevoir un autre composant (12).

12. Système modulaire comprenant deux coques de boîtier (3, 3',...) ou plus du servofrein selon l'une des revendications précédentes, **caractérisé en ce que** chaque coque de boîtier (3, 3',...) comporte dans la portion de fond (4) un motif de trous défini (13) pourvu d'au moins deux trous (14, 14') et chaque coque de boîtier (3, 3',...) est associée à un angle de rotation propre (β, β',...) duquel le motif de trous (13) est disposée de manière décalée par rapport à la trame des encoches (9) dans la direction circonférentielle autour de l'axe central (M).

13. Système modulaire selon la revendication 12, **caractérisé en ce que** le motif de trous (13) comporte au moins deux trous (14, 14') qui sont disposés de manière axialement symétrique l'un par rapport à l'autre autour de l'axe central (M).

14. Système modulaire comprenant deux coques de boîtier (3, 3',...) ou plus du servofrein selon la revendication 11, **caractérisé en ce que** chaque coque de boîtier (3, 3',...) présente un modèle d'agencement propre défini du passage ou des passages (11 , 11',...).
